# EUROPEAN PATENT SPECIFICATION

(11) **EP 4 190 023 B1**
(45) Date of publication and mention of the grant of the patent: **10.09.2025**
(21) Application number: 21850503.0
(22) Date of filing: 23.07.2021
(51) Int. Cl.: H04W 28/02, H04W 12/033, H04W 80/04, H04W 84/12, H04L 45/50

(54) **TCLAS ELEMENT FOR FILTERING IPSEC TRAFFIC**
TCLAS-ELEMENT ZUR FILTERUNG VON IPSEC-VERKEHR
ÉLÉMENT TCLAS DE FILTRAGE DU TRAFIC IPSEC

(30) Priority: 27.07.2020 US 202063057088 P
(43) Date of publication of application: 07.06.2023
(73) Proprietor: INTEL Corporation, Santa Clara, CA 95054 (US)
(72) Inventor: GUPTA, Binita, San Diego, California 92127 (US); CANPOLAT, Necati, Beaverton, Oregon 97006 (US)
(74) Representative: Viering, Jentschura & Partner mbB Patent- und Rechtsanwälte
(86) International application number: PCT/US2021/042923
(87) International publication number: WO 2022/026311

(56) References cited:
- US-A1- 2013 294 429
- US-A1- 2014 105 017
- US-A1- 2016 156 597
- MATTHEW FISCHER (BROADCOM INC): "IPSEC-Classifier", vol. 802.11m, no. 6, 14 March 2019 (2019-03-14), pages 1 - 7, XP068148276, Retrieved from the Internet <URL:https://mentor.ieee.org/802.11/dcn/19/11-19-0295-06-000m-ipsec-classifier.docx> [retrieved on 20190314]
- "SECURITY ARCHITECTURE FOR THE INTERNET PROTOCOL", NETWORK WORKING GROUP REQUEST FOR COMMENTS, XX, XX, 1 November 1998 (1998-11-01), pages 1 - 58, XP002902388
- BINITA GUPTA (INTEL): "Technical report on interworking between 3GPP 5G system and WLAN", vol. 802.11 AANI, 1 September 2020 (2020-09-01), pages 1 - 38, XP068172408, Retrieved from the Internet <URL:https://mentor.ieee.org/802.11/dcn/20/11-20-1376-00-AANI-technical-report-on-interworking-between-3gpp-5g-system-and-wlan.docx> [retrieved on 20200901]
- MATTHEW FISCHER ET AL.: "IPSEC-Classifier", IEEE 802.11-19/0295R6,, vol. 802.11m, no. 6, 14 March 2019 (2019-03-14), Piscataway, NJ USA , pages 1 - 7, XP068148276
- "IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Redline ; IEEE Std 802.11-2007 (Revision", [IEEE STANDARD], IEEE STANDARD;, PISCATAWAY, NJ, USA, 12 June 2007 (2007-06-12), PISCATAWAY, NJ, USA , pages 1 - 1238, XP068166730, ISBN: 978-0-7381-5656-9

## Description

### PRIORITY CLAIM

This application claims priority' to United States Provisional Patent Application Serial No. 63/057,088, filed July 27, 2020.

### TECHNICAL FIELD

Embodiments pertain to wireless communications as set out in the appended set of claims. Some embodiments relate to wireless local area networks (WLANs) and WLAN access. Some embodiments relate to fifth generation (5G) network traffic carried over IPsec security associates (SAs) within the WLAN access.

### BACKGROUND

Internet Protocol Security (IPsec) is a secure network protocol suite that authenticates and encrypts packets to provide secure encrypted communication between devices over an Internet Protocol network. IPsec is used in virtual private networks (VPNs), for example. One issue with communicating data over Wi-Fi is Quality-of- Service (QoS) differentiation for 5G traffic (e.g., 5G user flows and 5G signaling) carried over IPsec SAs within the Wi-Fi access. Thus, what is needed is a way to enable IPsec traffic filtering to ensure end-to- end QoS over Wi-Fi in a 5G network.

MATTHEW FISCHER (BROADCOM INC): "IPSEC-Classifier", vol. 802.11m, no. 6, 14 March 2019 (2019-03-14), pages 1 - 7, XP068148276 discloses the procedure for addition of a classifier for a traffic classification, TCLAS, element that allows the use of Internet Protocol Security (IPsec) header information for classification.

"SECURITY ARCHITECTURE FOR THE INTERNET PROTOCOL", NETWORK WORKING GROUP REQUEST FOR COMMENTS, XX, XX, 1 November 1998 (1998-11-01), pages 1 - 58, XP002902388 discloses security association (SA) management requirements for all IPv6 implementations and for those IPv4 implementations that implement Authentication Header (AH), Encapsulating Security Payload (ESP), or both.

BINITA GUPTA (INTEL): "Technical report on interworking between 3GPP 5G system and WLAN", vol. 802.11 AANI, 1 September 2020 (2020-09-01), pages 1 - 38, XP068172408 discloses interworking approaches, architecture, related functions, procedures, protocols and interfaces as defined by 3GPP for interworking of WLAN access network with the 5G system, highlighting technical issues and gaps related to WLAN interworking with 5G system and providing technical recommendations and guidance to address identified gaps.

### BRIEF DESCRIPTION OF THE DRAWINGS

FIG. 1 illustrates a WLAN Reference architecture for device centric QoS Management for 5G flows, in accordance with some embodiments.
FIG. 2 illustrates a WLAN Reference architecture for network centric QoS Management for 5G flows, in accordance with some embodiments.
FIG. 3A illustrates a traffic classification (TCLAS) element format, in accordance with some embodiments.
FIG. 3B illustrates a Frame Classifier field, in accordance with some embodiments.
FIG. 4 is a table illustrating Classifier Value Types, in accordance with some embodiments.
FIG. 5A illustrates a Frame Classifier field of Classifier Type 11 for traffic over IPv4, in accordance with some embodiments.
FIG. 5B illustrates a Frame Classifier field of Classifier Type 11 for traffic over IPv6, in accordance with some embodiments.
FIG. 6 is a table illustrated IPsec SA Direction Values, in accordance with some embodiments.
FIG. 7 is a functional block diagram of a wireless communication device, in accordance with some embodiments.

### DETAILED DESCRIPTION

The invention is defined by the appended claims.

Some embodiments disclosed herein are directed to a station (STA) configured for operating in a wireless local area network (WLAN). In these embodiments, to carry a 5G QoS traffic flow over an IPsec security association (SA) within the WLAN network, the STA is configured to encode a frame to include a traffic classification (TCLAS) element comprising a frame classifier field. In these embodiments, the frame classifier field may include a classifier type subfield and a classifier parameters subfield. In these embodiments, to identify and filter the 5G QoS traffic flow carried over the IPsec SA, the STA may set the classifier type subfield to a predetermine value (e.g., 11) to indicate that IPsec SA parameters are included in the classifier parameters subfield and include a Security Parameter Index (SPI), a destination IP address, and a IPsec protocol within the classifier parameters subfield. In these embodiments, STA may be configured to transmit the frame over the WLAN as part of the 5G QoS traffic flow. These embodiments are described in more detail below.

In some embodiments, when the IPsec SA is established for the 5G QoS traffic flow over WLAN, the STA may be configured to encode the frame in accordance with an Encapsulating Security Payload (ESP) security protocol. In these embodiments, an ESP header may be encoded to include an SPI field that includes the SPI. In these embodiments, the destination IP address is from an outer IP header and may refer to a destination address for an end point for receipt and processing of IPsec packets.

In some embodiments, the frame classifier field may further include a classifier mask subfield before the classifier parameters subfield. In these embodiments, the STA may be configured to encode the classifier mask subfield to indicate that a first four fields of the classifier parameters subfield are to be matched in the frame for filtering traffic carried over the IPsec SA. In some embodiments, the first four fields of the classifier parameters subfield may comprise an IP protocol version field, a field to indicate the IPsec protocol, a field to indicate the destination IP address and a field to indicate the SPI associated with the IPsec SA. In these embodiments, the IP protocol version field may indicate whether the IP protocol version is IPv4 or IPv6.

In some embodiments, the field to indicate the IPsec protocol is a value for the IPsec protocol. In these embodiments, the STA may be configured to set the field to indicate the IPsec protocol to 50 for Encapsulating Security Payload (ESP) or to 51 for Authentication Header (AH).

In some embodiments, the classifier parameters subfield may be encoded to include an IPsec SA direction field to indicate a direction (e.g., uplink or downlink) in which the 5G QoS traffic flow is carried over the IPsec SA. In some embodiments, the STA may be configured to set the classifier type subfield to a value of 11 to indicate that IPsec SA parameters are included in the classifier parameters subfield. In these embodiments, the STA may be configured to set the classifier type subfield to a value of 0 through 10 to indicate non-IPsec SA classifier parameters.

In some embodiments, the STA may be configured to setup the 5G QoS traffic flow for the IPsec SA. In these embodiments, the STA may be part of a user equipment (UE) configured for operating in a 5G network. In these embodiments, the STA may comprise a 5G QoS entity. In some of these embodiments, the STA may comprise a NWu interface for connecting to a 5G core network with non-Access Stratum (NAS) functionality.

In some embodiments, the IPsec SA is established between a Non-3GPP Inter-Working Function (N3IWF) N3IWF or a Trusted Non-3GPP Gateway Function (TNGF) and the UE. In these embodiments, the TCLAS element may be configured to provide traffic filtering information for the 5G QoS traffic flow carried over the IPsec SA established between the N31WF or the TNGF and the UE. In these embodiments, the TCLAS element supports IPsec traffic filtering to ensure end-to-end Quality of Service over Wi-Fi in 5G systems. The TCLAS element may also support filtering of IPsec traffic based on a combination of the SPI (Security Parameter Index), the destination IP address (for the IPsec processing end point) and the IPsec protocol. In some embodiments, the STA may comprise a baseband processor and its memory may be configured to store the TCLAS element.

Some embodiments are directed to a non-transitory computer-readable storage medium that stores instructions for execution by processing circuitry of a STA configured for operating in a wireless local area network (WLAN). In these embodiments, to carry a 5G QoS traffic flow over an IPsec security association (SA) within the WLAN network, the STA may be configured to encode a frame to include a traffic classification (TCLAS) element comprising a frame classifier field. In these embodiments, the frame classifier field includes a classifier type subfield and a classifier parameters subfield. In these embodiments, to identify and filter the 5G QoS traffic flow carried over the IPsec SA, the STA may be configured to: set the classifier type subfield to a predetermine value (e.g., 11) to indicate that IPsec SA parameters are included in the classifier parameters subfield, and include a Security Parameter Index (SPI), a destination IP address, and a IPsec protocol within the classifier parameters subfield. Some embodiments are directed to a method performed by STA configured for operating in a wireless local area network (WLAN). These embodiments are described in more detail below.

3GPP releases 15 and 16 define support for integrating untrusted and trusted Wi-Fi access networks with 5G system through N3IWF (Non-3GPP Inter-Working Function) and TNGF (Trusted Non-3GPP Gateway Function) functions respectively as described in TS 23.501. A UE can establish PDU session over Wi-Fi access only or it can establish Multi-Access PDU session (MA PDU session) which enables carrying user plane traffic over both 3GPP (NR. LTE) and Wi-Fi access simultaneously. These PDU sessions carry user data traffic over 5G QoS flows. To carry 5G flows over Wi-Fi access. IPsec security associations (SAs) are established between gateway functions N3IWF/TNGF and UE. The 5G user data flows are carried over IPsec child SAs and 5G NAS signaling is carried over an IPsec signaling SA established over Wi-Fi access.

In 5G systems, the QoS requirements of 5G QoS flows are also applicable when these flows are carried over WLAN access. It is important to ensure that the QoS differentiation within WLAN access can be provided for these 5G QoS flows taking into account 5G QoS characteristics and parameters, to satisfy end-to-end QoS requirements for applications/services no matter which radio access carries the traffic.

Within the Wi-Fi access, traffic identification and traffic filtering are provided by the parameters in the TCLAS element as defined in the IEEE 802.11 spec. To provide QoS differentiation for 5G traffic carried over IPsec SAs within the Wi-Fi access, the TCLAS element needs to be extended to filter IPsec SA traffic.

Some embodiments disclosed herein provide an extension to the 802.11 TCLAS element to enable IPsec traffic filtering, to ensure end-to-end Quality of Service over Wi-Fi in 5G systems.

In some embodiments, support for QoS differentiation for 5G traffic (5G user flows and 5G signaling) carried over IPsec SAs within the Wi-Fi access, is provided by extending the TCLAS element to filter IPsec SA traffic based on combination of SPI (Security Parameter Index), destination IP address (for the IPsec processing end point) and IPsec protocol, three parameters which uniquely identify an IPsec SA per RFC 2401.

Several vendors and operators are planning to deploy 5G systems possibly with Wi-Fi for data transfer for applications in enterprises, homes, industrial automation and public hotspots. Embodiments disclosed herein enable QoS differentiation for 5G user data and signaling traffic carried over IPsec SAs within the Wi-Fi access. This can ensure end-to-end Quality of Service for 5G services/applications carried over Wi-Fi access, enabling seamless usage of 3GPP and Wi-Fi radios, thus providing improved user experience for 5G services.

Some embodiments disclosed herein provide a TCLAS extension for 5G Traffic. To carry 5G user data and signaling traffic over the untrusted and trusted WLAN access integrated with the 5G network, one or more IPsec security associations (SAs) are established between N3IWF/TNGF and UE as described in 3GPP, 'TS 24.502 Access to the 3GPP 5G Core Network (5GCN) via Non-3GPP Access Networks (N3AN); Stage 3. The 5G user data flows are carried over one or more IPsec child SAs and 5G NAS signaling is carried over an IPsec signaling SA established over Wi-Fi access.

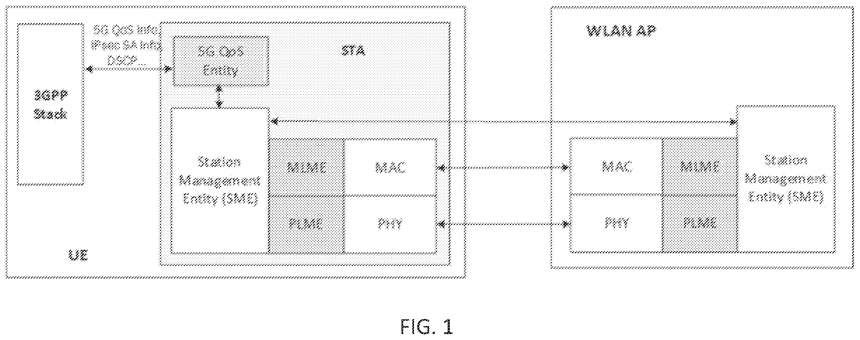

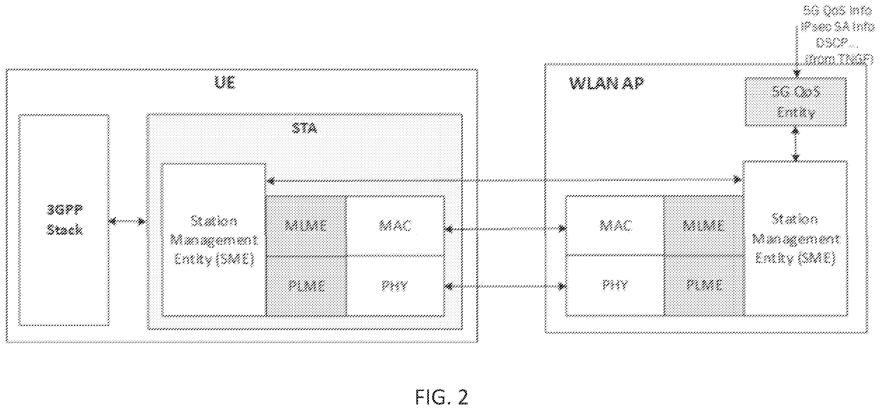

FIG. 1 shows WLAN reference architecture model for device centric QoS management related to 5G user data flows and 5G signaling carried over IPsec SAs. FIG. 2 shows WLAN reference architecture model for network centric QoS management related to 5G user data flows and 5G signaling carried over IPsec SAs. In both these approaches, 5G QoS related information is received by the higher layer 5G QoS Entity within the WLAN domain from the 3GPP domain. In both these approaches QoS traffic streams (TS) are setup by the WLAN STA with the WLAN AP for filtering and prioritizing 5G traffic carried over IPsec SAs established over WLAN access.

The TCLAS element specifies traffic filtering parameters for traffic to be filtered and prioritized for QoS differentiation for a traffic stream within WLAN. This element needs to be enhanced to specify filtering parameters to filter traffic carried over a specific IPsec SA for filtering 5G traffic carried over IPsec child SAs and/or signaling IPsec SA established between N3IWF/TNGF and UE. The enhanced TCLAS element can be generically used to specify traffic filters for filtering traffic carried over an IPsec SA in DL or UL.

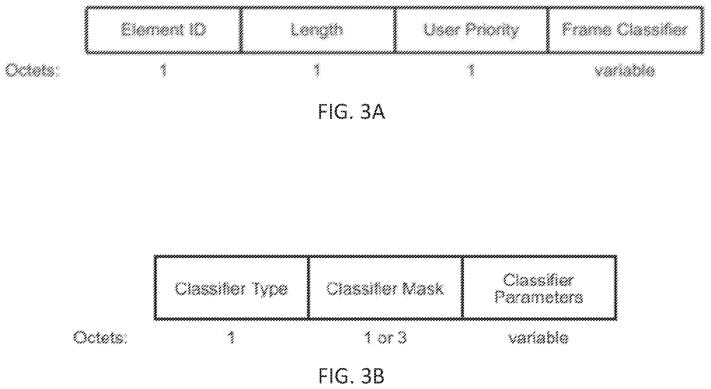

The TCLAS element contains a set of parameters necessary to identify various kinds of PDU or incoming MSDU that belong to a particular TS. FIG. 3A illustrates a traffic classification (TCLAS) element format, in accordance with some embodiments. FIG. 3B illustrates a Frame Classifier field, in accordance with some embodiments. The Classifier Type values as defined in the IEEE P802.11-REVmd/D3.1, February 2020.

None of the existing Classifier Type value can be used to filter packets carried over specific IPsec SA. The Classifier Type 10 can allow filtering packets based on an SPI, however it does not allow filtering packets based on unique identification of an IPsec SA through combination of SPI, Destination IP Address and Protocol Type.

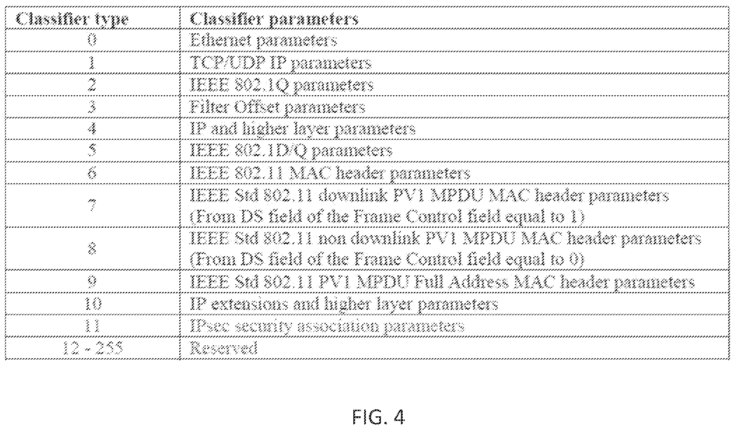

Embodiments disclosed herein propose to assign a new Classifier Type 11 to extend the TCLAS element for providing IPsec SA parameters needed to identify and filter IPsec SA traffic as shown in FIG. 4. FIG. 4 is a table illustrating Classifier Value Types, in accordance with some embodiments.

IPsec SAs exist in pairs with one SA in each direction for inbound and outbound traffic exchanged between IPsec end points as per RFC 2401. IPsec SA in each direction is identified by the SPI (Security Parameter Index), destination IP address (for the IPsec processing end point) and IPsec protocol for the SA. In the case of IPsec SAs established over WLAN to carry 5G traffic, ESP (Encapsulating Security Payload) security protocol is used which is identified from the Protocol or Next Header field in the outer IP header of an IPsec packet. The destination IP address is from the outer IP header and refers to the destination address for the end point which will receive and process the IPsec packets. The SPI field is included in the ESP header.

Additionally, for filtering and prioritizing IPsec SA traffic, the WLAN AP and the WLAN STA would need to know the direction of the IPsec SA (UL or DL), so that the right sets of filters (SPI, Destination IP Address, IPsec protocol) can be provided for QoS traffic streams setup in uplink and downlink direction to filter IPsec SA traffic.

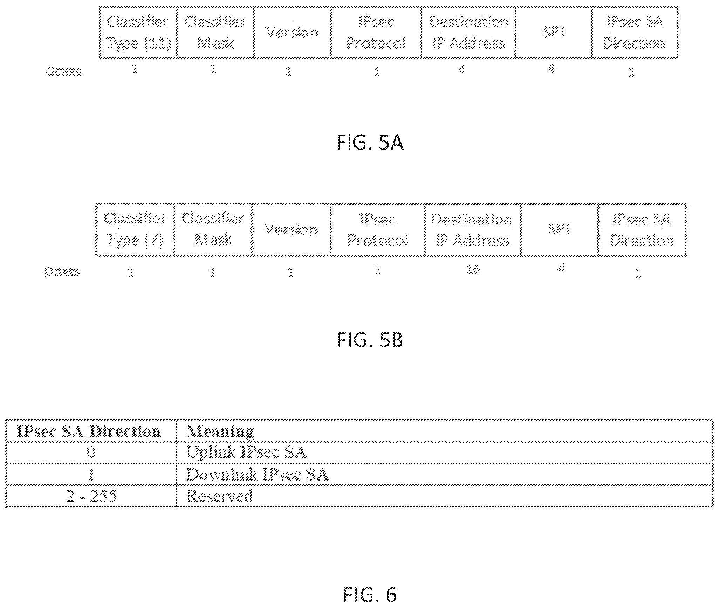

FIGs. 5A and 5B define the format of the Frame Classifier field for Classifier Type 11 to provide filtering parameters for IPsec SA traffic. FIG. 5A illustrates a Frame Classifier field of Classifier Type 11 for traffic over IPv4, in accordance with some embodiments. FIG. 5B illustrates a Frame Classifier field of Classifier Type 11 for traffic over IPv6, in accordance with some embodiments. The Classifier Mask filed may have first 4 bits set to 1 to indicate that the first four fields should be matched in the MSDU for filtering traffic carried over IPsec SA. In these embodiments, the Classifier Type field is set to 11, although this is not a requirement as another value may be designated for filtering for IPsec SA traffic.

In some embodiments, the Classifier Mask field has first four LSB bits set to 1, indicating that the first four fields (Version, IPsec Protocol, Destination IP Address and SPI) needs to be matched in the MSDU for filtering traffic carried over IPsec SA. The Version field indicates IP protocol version, set to 4 for IPv4 and 6 for IPv6.

The IPsec Protocol field indicates the value for the Protocol or the Next Header parameter in the outer IP header, indicating IPsec protocol carried in the encapsulated packet. Set to 50 for ESP (Encapsulating Security Payload, RFC 4303) and 51 for AH (Authentication Header, RFC 4302).

The Destination IP Address field is the destination address from the outer IP header and refers to the end point which will receive and process the IPsec packets. The SPI field indicates the Security Parameter Index associated with the IPsec security association.

The IPsec SA Direction field indicates the Uplink or Downlink direction in which the traffic is carried over the IPsec security association and is used to setup appropriate filters for filtering uplink and downlink IPsec SA traffic. IPsec SA in each direction (UL or DL) is uniquely identified by combination of (SPI, Destination IP Address and Protocol) parameters. FIG. 6 is a table illustrated IPsec SA Direction Values, in accordance with some embodiments.

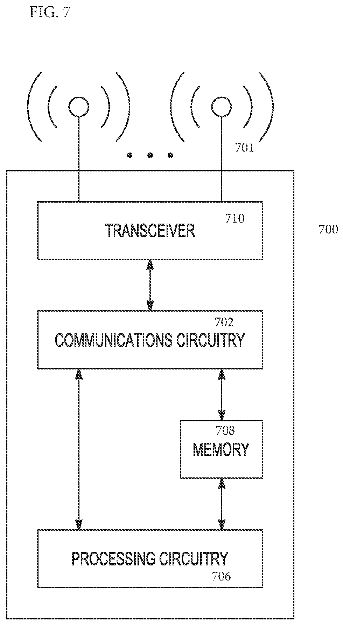

FIG. 7 is a functional block diagram of a wireless communication device, in accordance with some embodiments. * In one embodiment, FIG. 7 illustrates a functional block diagram of a communication station (STA) that may be suitable for use as an AP STA, a non-AP STA or other user device in accordance with some embodiments. The communication station 700 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 700 may include communications circuitry 702 and a transceiver 710 for transmitting and receiving signals to and from other communication stations using one or more antennas 701. The communications circuitry 702 may include circuitry that can operate the physical layer (PHY) communications and/or medium access control (MAC) communications for controlling access to the wireless medium, and/or any other communications layers for transmitting and receiving signals. The communication station 700 may also include processing circuitry 706 and memory 708 arranged to perform the operations described herein. In some embodiments, the communications circuitry 702 and the processing circuitry 706 may be configured to perform operations detailed in the above figures, diagrams, and flows.

In accordance with some embodiments, the communications circuitry 702 may be arranged to contend for a wireless medium and configure frames or packets for communicating over the wireless medium. The communications circuitry 702 may be arranged to transmit and receive signals. The communications circuitry 702 may also include circuitry for modulation/demodulation, upconversion/downconversion, filtering, amplification, etc. In some embodiments, the processing circuitry 706 of the communication station 700 may include one or more processors. In other embodiments, two or more antennas 701 may be coupled to the communications circuitry 702 arranged for sending and receiving signals. The memory 708 may store information for configuring the processing circuitry 706 to perform operations for configuring and transmitting message frames and performing the various operations described herein. The memory 708 may include any type of memory, including non-transitory memory, for storing information in a form readable by a machine (e.g., a computer). For example, the memory 708 may include a computer-readable storage device, read-only memory (ROM), random-access memory (RAM), magnetic disk storage media, optical storage media, flash-memory devices and other storage devices and media.

In some embodiments, the communication station 700 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 700 may include one or more antennas 701. The antennas 701 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 700 may include one or more of a keyboard, a display, a non-volatile memory port, multiple antennas, a graphics processor, an application processor, speakers, and other mobile device elements. The display may be an LCD screen including a touch screen.

Although the communication station 700 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 700 may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

In some embodiments, a physical layer protocol data unit may be a physical layer conformance procedure (PLCP) protocol data unit (PPDU). In some embodiments, the AP and STAs may communicate in accordance with one of the IEEE 802.11 standards, e.g., IEEE 802.11-2016, IEEE P802.11-REVmd/D2.4, August 2019, and IEEE draft specification IEEE P802.11ax/D5.0, October 2019.

## Claims

1. An apparatus of a station, STA, (700) configured for operating in a wireless local area network, WLAN, the apparatus comprising: processing circuitry (706); and memory (708),
wherein to carry a 5G QoS traffic flow over an IPsec security association, SA, within the WLAN network, the processing circuitry (706) is configured to:
encode a frame to include a traffic classification, TCLAS, element comprising a frame classifier field, wherein the frame classifier field includes a classifier type subfield and a classifier parameters subfield,
wherein to identify and filter the 5G QoS traffic flow carried over the IPsec SA, the processing circuitry (706) is configured to:
set the classifier type subfield to a predetermine value to indicate that IPsec SA parameters are included in the classifier parameters subfield, and include a Security Parameter Index, SPI, a destination IP address, and a IPsec protocol within the classifier parameters subfield, wherein the classifier parameters subfield further comprises an IPsec SA direction field to indicate a direction in which the 5G QoS traffic flow is carried over the IPsec SA; and
configure the STA (700) to transmit the frame over the WLAN as part of the 5G QoS traffic flow.

2. The apparatus of claim 1, wherein when the IPsec SA is established for the 5G QoS traffic flow over WLAN, the processing circuitry (706) is configured to encode the frame in accordance with an Encapsulating Security Payload, ESP, security protocol, wherein an ESP header is encoded to include an SPI field that includes the SPI, and
wherein the destination IP address is from an outer IP header and refers to a destination address for an end point for receipt and processing of IPsec packets.

3. The apparatus of claim 2, wherein the frame classifier field further includes a classifier mask subfield before the classifier parameters subfield, and
wherein the processing circuitry (706) is configured to encode the classifier mask subfield to indicate that a first four fields of the classifier parameters subfield are to be matched in the frame for filtering traffic carried over the IPsec SA.

4. The apparatus of claim 3, wherein the first four fields of the classifier parameters subfield comprise an IP protocol version field, a field to indicate the IPsec protocol, a field to indicate the destination IP address and a field to indicate the SPI associated with the IPsec SA, and
wherein the IP protocol version field indicates whether the IP protocol version is IPv4 or IPv6.

5. The apparatus of claim 4, wherein the field to indicate the IPsec protocol is a value for the IPsec protocol, and
wherein the processing circuitry (706) is configured to set the field to indicate the IPsec protocol to 50 for the ESP or to 51 for Authentication Header, AH.

6. The apparatus of claim 5, wherein the processing circuitry (706) is configured to set the classifier type subfield to a value of 11 to indicate that IPsec SA parameters are included in the classifier parameters subfield, and
wherein the processing circuitry (706) is configured to set the classifier type subfield to a value of 0 through 10 to indicate non-IPsec SA classifier parameters.

7. The apparatus of claim 6, wherein the processing circuitry (706) is configured to setup the 5G QoS traffic flow for the IPsec SA,
wherein the STA (700) is configured to be part of the UE configured for operating in a 5G network, wherein the STA (700) comprises a 5G QoS entity, and
wherein the apparatus further comprising a NWu interface for connecting to a 5G core network with non-Access Stratum, NAS, functionality.

8. The apparatus of claim 7, wherein the IPsec SA is established between a Non-3GPP Inter-Working Function (N3IWF) N3IWF or a Trusted Non-3GPP Gateway Function (TNGF) and the UE, and
wherein the TCLAS element is configured to provide traffic filtering information for the 5G QoS traffic flow carried over the IPsec SA established between the N3IWF or the TNGF and the UE.

9. The apparatus of claim 1, wherein the processing circuitry (706) comprises a baseband processor, and wherein the memory (708) is configured to store the TCLAS element.

10. A non-transitory computer-readable storage medium that stores instructions for execution by processing circuitry (706) of a station, STA, (700) configured for operating in a wireless local area network, WLAN,
wherein to carry a 5G QoS traffic flow over an IPsec security association, SA, within the WLAN network, the processing circuitry (706) is configured to:
encode a frame to include a traffic classification, TCLAS, element comprising a frame classifier field, wherein the frame classifier field includes a classifier type subfield and a classifier parameters subfield,
wherein to identify and filter the 5G QoS traffic flow carried over the IPsec SA, the processing circuitry (706) is configured to:
set the classifier type subfield to a predetermine value to indicate that IPsec SA parameters are included in the classifier parameters subfield, and include a Security Parameter Index, SPI, a destination IP address, and a IPsec protocol within the classifier parameters subfield, wherein the classifier parameters subfield further comprises an IPsec SA direction field to indicate a direction in which the 5G QoS traffic flow is carried over the IPsec SA; and
configure the STA (700) to transmit the frame over the WLAN as part of the 5G QoS traffic flow.

11. The non-transitory computer-readable storage medium of claim 10, wherein when the IPsec SA is established for the 5G QoS traffic flow over WLAN, the processing circuitry (706) is configured to encode the frame in accordance with an Encapsulating Security Payload, ESP, security protocol, wherein an ESP header is encoded to include an SPI field that includes the SPI, and
wherein the destination IP address is from an outer IP header and refers to a destination address for an end point for receipt and processing of IPsec packets.

12. The non-transitory computer-readable storage medium of claim 11, wherein the frame classifier field further includes a classifier mask subfield before the classifier parameters subfield, and
wherein the processing circuitry (706) is configured to encode the classifier mask subfield to indicate that a first four fields of the classifier parameters subfield are to be matched in the frame for filtering traffic carried over the IPsec SA.

13. A method performed by processing circuitry (706) of a station, STA, (700) configured for operating in a wireless local area network, WLAN,
wherein to carry a 5G QoS traffic flow over an IPsec security association, SA, within the WLAN network, the method comprises:
encoding a frame to include a traffic classification, TCLAS, element comprising a frame classifier field, wherein the frame classifier field includes a classifier type subfield and a classifier parameters subfield,
wherein to identify and filter the 5G QoS traffic flow carried over the IPsec SA, the method comprises setting the classifier type subfield to a predetermine value to indicate that IPsec SA parameters are included in the classifier parameters subfield, and including a Security Parameter Index, SPI, a destination IP address, and a IPsec protocol within the classifier parameters subfield, wherein the classifier parameters subfield comprises an IPsec SA direction field to indicate a direction in which the 5G QoS traffic flow is carried over the IPsec SA; and
configuring the STA (700) to transmit the frame over the WLAN as part of the 5G QoS traffic flow.

14. The method of claim 13 further comprising establishing the IPsec SA for the 5G QoS traffic flow over WLAN; and
encoding the frame in accordance with an Encapsulating Security Payload, ESP, security protocol, wherein an ESP header is encoded to include an SPI field that includes the SPI.

## Patentansprüche

1. Einrichtung einer Station, STA, (700), die zum Betreiben in einem drahtlosen lokalen Netzwerk, WLAN, konfiguriert ist, wobei die Einrichtung Folgendes umfasst: eine Verarbeitungsschaltungsanordnung (706); und einen Speicher (708),
wobei zum Übertragen eines 5G-QoS-Verkehrsflusses über eine IPsec-Sicherheitsassoziation, SA, innerhalb des WLAN-Netzwerks die Verarbeitungsschaltungsanordnung (706) dazu konfiguriert ist:
einen Frame zu codieren, um ein Verkehrsklassifizierungs-Element, TCLAS-Element, zu beinhalten, das ein Frameklassifiziererfeld umfasst, wobei das Frameklassifiziererfeld ein Klassifizierertyp-Unterfeld und ein Klassifiziererparameter-Unterfeld beinhaltet,
wobei, um den 5G-QoS-Verkehrsfluss, der über die IPsec-SA übertragen wird, zu identifizieren und zu filtern, die Verarbeitungsschaltungsanordnung (706) dazu konfiguriert ist:
das Klassifizierertyp-Unterfeld auf einen vorbestimmten Wert einzustellen, um anzugeben, dass IPsec-SA-Parameter in dem Klassifiziererparameter-Unterfeld beinhaltet sind, und einen Sicherheitsparameterindex, SPI, eine Ziel-IP-Adresse und ein IPsec-Protokoll innerhalb des Klassifiziererparameter-Unterfelds beinhalten, wobei das Klassifiziererparameter-Unterfeld ferner ein IPsec-SA-Richtungsfeld umfasst, um eine Richtung anzugeben, in der der 5G-QoS-Verkehrsfluss über die IPsec-SA übertragen wird; und
die STA (700) zu konfigurieren, um den Frame über das WLAN als Teil des 5G-QoS-Verkehrsflusses zu übertragen.

2. Einrichtung nach Anspruch 1, wobei, wenn der IPsec-SA für den 5G-QoS-Verkehrsfluss über WLAN erstellt ist, die Verarbeitungsschaltungsanordnung (706) dazu konfiguriert ist, den Frame gemäß einem Sicherheitsprotokoll für Encapsulating Security Payload, ESP, zu codieren, wobei ein ESP-Header codiert ist, um ein SPI-Feld zu beinhalten, das den SPI beinhaltet, und wobei die Ziel-IP-Adresse von einem äußeren IP-Header stammt und sich auf eine Zieladresse für einen Endpunkt zum Empfangen und Verarbeiten von IPsec-Paketen bezieht.

3. Einrichtung nach Anspruch 2, wobei das Frameklassifiziererfeld ferner ein Klassifizierermasken-Unterfeld vor dem Klassifiziererparameter-Unterfeld beinhaltet, und
wobei die Verarbeitungsschaltungsanordnung (706) dazu konfiguriert ist, das Klassifizierermasken-Unterfeld zu codieren, um anzugeben, dass erste vier Felder des Klassifiziererparameter-Unterfelds in dem Frame zum Filtern von Verkehr, der über die IPsec-SA übertragen wird, abgeglichen werden sollen.

4. Einrichtung nach Anspruch 3, wobei die ersten vier Felder des Klassifiziererparameter-Unterfelds ein IP-Protokollversionsfeld, ein Feld zum Angeben des IPsec-Protokolls, ein Feld zum Angeben der Ziel-IP-Adresse und ein Feld zum Angeben der SPI, die mit dem IPsec-SA assoziiert ist, umfassen, und
wobei das IP-Protokollversionsfeld angibt, ob die IP-Protokollversion IPv4 oder IPv6 ist.

5. Einrichtung nach Anspruch 4, wobei das Feld zum Angeben des IPsec-Protokolls ein Wert für das IPsec-Protokoll ist, und
wobei die Verarbeitungsschaltungsanordnung (706) dazu konfiguriert ist, das Feld zum Angeben des IPsec-Protokolls auf 50 für den ESP oder auf 51 für Authentifizierungs-Header, AH, einzustellen.

6. Einrichtung nach Anspruch 5, wobei die Verarbeitungsschaltungsanordnung (706) dazu konfiguriert ist, das Klassifizierertyp-Unterfeld auf einen Wert von 11 einzustellen, um anzugeben, dass IPsec-SA-Parameter in dem Klassifiziererparameter-Unterfeld beinhaltet sind, und
wobei die Verarbeitungsschaltungsanordnung (706) dazu konfiguriert ist, das Klassifizierertyp-Unterfeld auf einen Wert von 0 bis 10 einzustellen, um nicht-IPsec-SA-Klassifiziererparameter anzugeben.

7. Einrichtung nach Anspruch 6, wobei die Verarbeitungsschaltungsanordnung (706) dazu konfiguriert ist, den 5G-QoS-Verkehrsfluss für die IPsec-SA einzurichten,
wobei die STA (700) dazu konfiguriert ist, Teil des UE zu sein, das zum Betreiben in einem 5G-Netzwerk konfiguriert ist, wobei die STA (700) eine 5G-QoS-Entität umfasst, und
wobei die Einrichtung ferner eine NWu-Schnittstelle zum Verbinden mit einem 5G-Kernnetzwerk mit nicht-Access-Stratum-Funktionalität, NAS-Funktionalität, umfasst.

8. Einrichtung nach Anspruch 7, wobei die IPsec-SA zwischen einer Nicht-3GPP-Zusammenarbeitsfunktion (N3IWF) N31WF oder einer vertrauenswürdigen Nicht-3GPP-Gateway-Funktion (TNGF) und dem UE erstellt ist, und
wobei das TCLAS-Element dazu konfiguriert ist, Verkehrsfilterungsinformationen für den 5G-QoS-Verkehrsfluss bereitzustellen, der über die IPsec-SA übertragen wird, die zwischen der N31WF oder der TNGF und dem UE erstellt ist.

9. Einrichtung nach Anspruch 1, wobei die Verarbeitungsschaltungsanordnung (706) einen Basisbandprozessor umfasst und wobei der Speicher (708) dazu konfiguriert ist, das TCLAS-Element zu speichern.

10. Nichtflüchtiges computerlesbares Speichermedium, das Anweisungen zur Ausführung durch eine Verarbeitungsschaltungsanordnung (706) einer Station, STA, (700) speichert, die zum Betreiben in einem drahtlosen lokalen Netzwerk, WLAN, konfiguriert ist,
wobei zum Übertragen eines 5G-QoS-Verkehrsflusses über eine IPsec-Sicherheitsassoziation, SA, innerhalb des WLAN-Netzwerks die Verarbeitungsschaltungsanordnung (706) dazu konfiguriert ist:
einen Frame zu codieren, um ein Verkehrsklassifizierungs-Element, TCLAS-Element, zu beinhalten, das ein Frameklassifiziererfeld umfasst, wobei das Frameklassifiziererfeld ein Klassifizierertyp-Unterfeld und ein Klassifiziererparameter-Unterfeld beinhaltet,
wobei, um den 5G-QoS-Verkehrsfluss, der über die IPsec-SA übertragen wird, zu identifizieren und zu filtern, die Verarbeitungsschaltungsanordnung (706) dazu konfiguriert ist:
das Klassifizierertyp-Unterfeld auf einen vorbestimmten Wert einzustellen, um anzugeben, dass IPsec-SA-Parameter in dem Klassifiziererparameter-Unterfeld beinhaltet sind, und einen Sicherheitsparameterindex, SPI, eine Ziel-IP-Adresse und ein IPsec-Protokoll innerhalb des Klassifiziererparameter-Unterfelds beinhalten, wobei das Klassifiziererparameter-Unterfeld ferner ein IPsec-SA-Richtungsfeld umfasst, um eine Richtung anzugeben, in der der 5G-QoS-Verkehrsfluss über die IPsec-SA übertragen wird; und
die STA (700) zu konfigurieren, um den Frame über das WLAN als Teil des 5G-QoS-Verkehrsflusses zu übertragen.

11. Nichtflüchtiges computerlesbares Speichermedium nach Anspruch 10, wobei, wenn die IPsec-SA für den 5G-QoS-Verkehrsfluss über WLAN erstellt ist, die Verarbeitungsschaltungsanordnung (706) dazu konfiguriert ist, den Frame gemäß einem Sicherheitsprotokoll für Encapsulating Security Payload, ESP, zu codieren, wobei ein ESP-Header so codiert ist, dass er ein SPI-Feld beinhaltet, das den SPI beinhaltet, und
wobei die Ziel-IP-Adresse von einem äußeren IP-Header stammt und sich auf eine Zieladresse für einen Endpunkt zum Empfangen und Verarbeiten von IPsec-Paketen bezieht.

12. Nichtflüchtiges computerlesbares Speichermedium nach Anspruch 11, wobei das Frameklassifiziererfeld ferner ein Klassifizierermasken-Unterfeld vor dem Klassifiziererparameter-Unterfeld beinhaltet, und
wobei die Verarbeitungsschaltungsanordnung (706) dazu konfiguriert ist, das Klassifizierermasken-Unterfeld zu codieren, um anzugeben, dass erste vier Felder des Klassifiziererparameter-Unterfelds in dem Frame zum Filtern von Verkehr, der über die IPsec-SA übertragen wird, abgeglichen werden sollen.

13. Verfahren, das durch eine Verarbeitungsschaltungsanordnung (706) einer Station, STA, (700) durchgeführt wird, die zum Betreiben in einem drahtlosen lokalen Netzwerk, WLAN, konfiguriert ist,
wobei zum Übertragen eines 5G-QoS-Verkehrsflusses über eine IPsec-Sicherheitsassoziation, SA, innerhalb des WLAN-Netzwerks das Verfahren Folgendes umfasst:
Codieren eines Frames, um ein Verkehrsklassifizierungs-, TCLAS-, Element zu beinhalten, das ein Frameklassifiziererfeld umfasst, wobei das Frameklassifiziererfeld ein Klassifizierertyp-Unterfeld und ein Klassifiziererparameter-Unterfeld beinhaltet,
wobei, um den 5G-QoS-Verkehrsfluss, der über die IPsec-SA übertragen wird, zu identifizieren und zu filtern, das Verfahren das Einstellen des Klassifizierertyp-Unterfelds auf einen vorbestimmten Wert umfasst, um anzugeben, dass IPsec-SA-Parameter in dem Klassifiziererparameter-Unterfeld beinhaltet sind, und das einen Sicherheitsparameterindex, SPI, eine Ziel-IP-Adresse, und ein IPsec-Protokoll innerhalb des Klassifiziererparameter-Unterfelds, wobei das Klassifiziererparameter-Unterfeld ein IPsec-SA-Richtungsfeld umfasst, um eine Richtung anzugeben, in der der 5G-QoS-Verkehrsfluss über die IPsec-SA übertragen wird; und
Konfigurieren der STA (700), um den Frame über das WLAN als Teil des 5G-QoS-Verkehrsflusses zu übertragen.

14. Verfahren nach Anspruch 13, das ferner das Erstellen des IPsec-SA für den 5G-QoS-Verkehrsfluss über WLAN umfasst; und
Codieren des Frames gemäß einem Sicherheitsprotokoll für Encapsulating Security Payload, ESP, wobei ein ESP-Header codiert ist, um ein SPI-Feld zu beinhalten, das den SPI beinhaltet.

## Revendications

1. Appareil d'une station, STA, (700) configurée pour fonctionner dans un réseau local sans fil, WLAN, l'appareil comportant: une circuiterie (706) de traitement ; et une mémoire (708),
afin de transporter un flux de trafic de QoS 5G sur une association de sécurité, SA, IPsec au sein du réseau WLAN, la circuiterie (706) de traitement étant configurée pour :
coder une trame pour inclure un élément de classification de trafic, TCLAS, comportant un champ de classificateur de trame, le champ de classificateur de trame comprenant un sous-champ de type de classificateur et un sous-champ de paramètres de classificateur,
afin d'identifier et de filtrer le flux de trafic de QoS 5G transporté sur la SA IPsec, la circuiterie (706) de traitement étant configurée pour :
régler le sous-champ de type de classificateur à une valeur prédéterminée pour indiquer que des paramètres de SA IPsec sont compris dans le sous-champ de paramètres de classificateur, et inclure un indice de paramètre de sécurité, SPI, une adresse IP de destination, et un protocole IPsec à l'intérieur du sous-champ de paramètres de classificateur, le sous-champ de paramètres de classificateur comportant en outre un champ de direction de SA IPsec pour indiquer une direction dans laquelle le flux de trafic de QoS 5G est transporté sur la SA IPsec ; et
configurer la STA (700) pour transmettre la trame sur le WLAN dans le cadre du flux de trafic de QoS 5G.

2. Appareil selon la revendication 1, lorsque la SA IPsec est établie pour le flux de trafic de QoS 5G via le WLAN, la circuiterie (706) de traitement étant configurée pour coder la trame conformément à un protocole de sécurité à charge utile de sécurité d'encapsulation, ESP, un en-tête d'ESP étant codé pour inclure un champ de SPI qui comprend le SPI, et
l'adresse IP de destination provenant d'un en-tête IP extérieur et faisant référence à une adresse de destination pour un point d'extrémité pour la réception et le traitement de paquets IPsec.

3. Appareil selon la revendication 2, le champ de classificateur de trame comprenant en outre un sous-champ de masque de classificateur avant le sous-champ de paramètres de classificateur, et
la circuiterie (706) de traitement étant configurée pour coder le sous-champ de masque de classificateur afin d'indiquer que quatre premiers champs du sous-champ de paramètres de classificateur doivent être mis en correspondance dans la trame pour filtrer un trafic transporté sur la SA IPsec.

4. Appareil selon la revendication 3, les quatre premiers champs du sous-champ de paramètres de classificateur comprenant un champ de version de protocole IP, un champ servant à indiquer le protocole IPsec, un champ servant à indiquer l'adresse IP de destination et un champ servant à indiquer le SPI associé à la SA IPsec, et
le champ de version de protocole IP indiquant si la version de protocole IP est IPv4 ou IPv6.

5. Appareil selon la revendication 4, le champ qui sert à indiquer le protocole IPsec étant une valeur pour le protocole IPsec, et
la circuiterie (706) de traitement étant configurée pour régler le champ servant à indiquer le protocole IPsec à 50 pour l'ESP ou à 51 pour l'en-tête d'authentification, AH.

6. Appareil selon la revendication 5, la circuiterie (706) de traitement étant configurée pour régler le sous-champ de type de classificateur à une valeur de 11 afin d'indiquer que des paramètres de SA IPsec sont compris dans le sous-champ de paramètres de classificateur, et
la circuiterie (706) de traitement étant configurée pour régler le sous-champ de type de classificateur à une valeur de 0 à 10 pour indiquer des paramètres de classificateur hors SA IPsec.

7. Appareil selon la revendication 6, la circuiterie (706) de traitement étant configurée pour établir le flux de trafic de QoS 5G pour la SA IPsec,
la STA (700) étant configurée pour faire partie de l'UE configuré pour fonctionner dans un réseau 5G, la STA (700) comportant une entité de QoS 5G, et
l'appareil comportant en outre une interface NWu servant à se connecter à un réseau central 5G avec une fonctionnalité hors strate d'accès, NAS.

8. Appareil selon la revendication 7, la SA IPsec étant établie entre une fonction d'interfonctionnement non-3GPP (N3IWF) N3IWF ou une fonction de passerelle de confiance non-3GPP (TNGF) et l'UE, et
l'élément de TCLAS étant configuré pour fournir des informations de filtrage de trafic pour le flux de trafic de QoS 5G transporté sur la SA IPsec établie entre la N3IWF ou la TNGF et l'UE.

9. Appareil selon la revendication 1, la circuiterie (706) de traitement comportant un processeur en bande de base, et la mémoire (708) étant configurée pour conserver l'élément de TCLAS.

10. Support de stockage non transitoire lisible par ordinateur qui conserve des instructions en vue d'une exécution par une circuiterie (706) de traitement d'une station, STA, (700) configurée pour fonctionner dans un réseau local sans fil, WLAN,
afin de transporter un flux de trafic de QoS 5G sur une association de sécurité, SA, IPsec au sein du réseau WLAN, la circuiterie (706) de traitement étant configurée pour :
coder une trame pour inclure un élément de classification de trafic, TCLAS, comportant un champ de classificateur de trame, le champ de classificateur de trame comprenant un sous-champ de type de classificateur et un sous-champ de paramètres de classificateur,
afin d'identifier et de filtrer le flux de trafic de QoS 5G transporté sur la SA IPsec, la circuiterie (706) de traitement étant configurée pour :
régler le sous-champ de type de classificateur à une valeur prédéterminée pour indiquer que des paramètres de SA IPsec sont compris dans le sous-champ de paramètres de classificateur, et inclure un indice de paramètre de sécurité, SPI, une adresse IP de destination, et un protocole IPsec à l'intérieur du sous-champ de paramètres de classificateur, le sous-champ de paramètres de classificateur comportant en outre un champ de direction de SA IPsec pour indiquer une direction dans laquelle le flux de trafic de QoS 5G est transporté sur la SA IPsec ; et
configurer la STA (700) pour transmettre la trame sur le WLAN dans le cadre du flux de trafic de QoS 5G.

11. Support de stockage non transitoire lisible par ordinateur selon la revendication 10, lorsque la SA IPsec est établie pour le flux de trafic de QoS 5G via le WLAN, la circuiterie (706) de traitement étant configurée pour coder la trame conformément à un protocole de sécurité à charge utile de sécurité d'encapsulation, ESP, un en-tête d'ESP étant codé pour inclure un champ de SPI qui comprend le SPI, et
l'adresse IP de destination provenant d'un en-tête IP extérieur et faisant référence à une adresse de destination pour un point d'extrémité pour la réception et le traitement de paquets IPsec.

12. Support de stockage non transitoire lisible par ordinateur selon la revendication 11, le champ de classificateur de trame comprenant en outre un sous-champ de masque de classificateur avant le sous-champ de paramètres de classificateur, et
la circuiterie (706) de traitement étant configurée pour coder le sous-champ de masque de classificateur afin d'indiquer que quatre premiers champs du sous-champ de paramètres de classificateur doivent être mis en correspondance dans la trame pour filtrer un trafic transporté sur la SA IPsec.

13. Procédé réalisé par une circuiterie (706) de traitement d'une station, STA, (700) configurée pour fonctionner dans un réseau local sans fil, WLAN,
afin de transporter un flux de trafic de QoS 5G sur une association de sécurité, SA, IPsec au sein du réseau WLAN, le procédé comportant :
le codage d'une trame pour inclure un élément de classification de trafic, TCLAS, comportant un champ de classificateur de trame, le champ de classificateur de trame comprenant un sous-champ de type de classificateur et un sous-champ de paramètres de classificateur,
afin d'identifier et de filtrer le flux de trafic de QoS 5G transporté sur la SA IPsec, le procédé comportant le réglage du sous-champ de type de classificateur à une valeur prédéterminée pour indiquer que des paramètres de SA IPsec sont compris dans le sous-champ de paramètres de classificateur, et l'inclusion d'un indice de paramètre de sécurité, SPI, d'une adresse IP de destination, et d'un protocole IPsec à l'intérieur du sous-champ de paramètres de classificateur, le sous-champ de paramètres de classificateur comportant un champ de direction de SA IPsec pour indiquer une direction dans laquelle le flux de trafic de QoS 5G est transporté sur la SA IPsec ; et
la configuration de la STA (700) pour transmettre la trame sur le WLAN dans le cadre du flux de trafic de QoS 5G.

14. Procédé selon la revendication 13 comportant en outre l'établissement de la SA IPsec pour le flux de trafic de QoS 5G via le WLAN ; et
le codage de la trame conformément à un protocole de sécurité à charge utile de sécurité d'encapsulation, ESP, un en-tête d'ESP étant codé pour inclure un champ de SPI qui comprend le SPI.
